# EUROPÄISCHE PATENTSCHRIFT

(11) **EP 1 604 549 B1**
(45) Veröffentlichungstag und Bekanntmachung des Hinweises auf die Patenterteilung: **30.08.2006**
(21) Anmeldenummer: 04721457.2
(22) Anmeldetag: 18.03.2004
(51) Int. Cl.: H05B 6/02, C21D 9/60

(54) **QUERFELD-ERWÄRMUNGSANLAGE ZUR INDUKTIVEN ERWÄRMUNG VON FLACHGUT**
TRANSVERSAL FIELD HEATING INSTALLATION FOR INDUCTIVELY HEATING FLAT OBJECTS
INSTALLATION DE CHAUFFAGE A CHAMPS TRANSVERSAUX SERVANT AU CHAUFFAGE PAR INDUCTION D'OBJETS PLATS

(30) Priorität: 19.03.2003 DE 10312623
(43) Veröffentlichungstag der Anmeldung: 14.12.2005
(73) Patentinhaber: Universität Hannover, 30167 Hannover (DE)
(72) Erfinder: NIKANOROV, Alexander, 30167 Hannover (DE); SCHÜLBE, Holger, 37290 Meissner (DE); NACKE, Bernard, 31303 Burgdorf (DE)
(74) Vertreter: Stornebel, Kai
(86) Internationale Anmeldenummer: PCT/DE2004/000573
(87) Internationale Veröffentlichungsnummer: WO 2004/084586

(56) Entgegenhaltungen:
- EP-B- 0 667 731
- US-A- 4 751 360
- US-A1- 2002 121 512

## Beschreibung

Die Erfindung betrifft eine Querfeld-Erwärmungsanlage zur induktiven Erwärmung von in eine Vorschubrichtung transportierbarem Flachgut mit mindestens einer sich quer zur Vorschubrichtung über die Breite des Flachgutes erstreckenden Induktoreinrichtung.

Anstelle von konventionellen gasbeheizten Öfen wird Flachgut, wie zum Beispiel Bleche, Bänder und Dünnbrammen, auch induktiv erwärmt. Hierbei wird in dem Blech ein Strom induziert, wodurch das Material erwärmt wird. Hierdurch werden vorteilhafter Weise Wärme- und Abbrandverluste vermindert. Zudem ermöglichen die erreichbaren Leistungsdichten einen erheblich geringeren Platzbedarf sowie kürzere Aufheizzeiten.

Induktive Erwärmungsanlagen für Flachgut werden der Längsfeld- oder der Querfelderwärmung zugeordnet. Bei der Längsfelderwärmung wird das zu erwärmende Blech von der Induktorspule vollständig umschlossen, so dass der magnetische Hauptfluss in Vorschubrichtung des Bleches gerichtet ist. Die induzierten Ströme schließen sich über dem Werkstückquerschnitt, wobei die sich einstellende Temperaturverteilung bei einer geeigneten Frequenz des Indulctorstroms über der gesamten Bandbreite des Flachgutes nahezu homogen ist. Nachteilig ist die hohe benötigte Frequenz und ein begrenzter Wirkungsgrad.

Es wurden daher Querfeld-Erwärmungsanlagen entwickelt, bei denen die Induktorspulen das Flachgut nicht umschließen, sondern an den Oberflächen des zu erwärmenden Flachgutes angeordnet sind. Auf diese Weise ist der magnetische Hauptfluss der Induktorspulen senkrecht zur Oberfläche des Flachgutes gerichtet. Nachteilig ist bei Querfeld-Erwärmungsanlagen jedoch, dass die Temperaturverteilung im Flachgut normaler Weise inhomogen ist. Dies erfordert für jeden Einsatzfall eine angepasste Konstruktion der geometrischen Abmessungen und eine Optimierung der Betriebsparameter einer Querfeld-Erwärmungsanlage.

In A. Ruhnke, A. Mühlbauer, A. Nikanorov, V. Demidovitch, "Wege zur Optimierung von Querfeld-Erwärmungsanlagen", Elektrowärme international, Heft B4, Dezember 1997, Seiten 130 bis 137 ist beschrieben, dass die nachteilige inhomogene Temperaturverteilung durch eine gezielte Gestaltung der Induktorspulen beeinflusst werden kann. Bei der Auslegung von Querfeld-Erwärmungsanlagen muss die komplexe dreidimensionale Verteilung der elektromagnetischen Feldgrößen berücksichtigt werden, die analytisch nicht mehr erfassbar sind. Zudem müssen zahlreiche Betriebs- und Anlageparameter vorhergesagt und berücksichtigt werden. Ein wesentlicher Einflussfaktor ist hierbei der Bandüberstand. Dies ist der Abstand zwischen der Außenkante des Spulenkopfes der Induktorspule und der Bandkante des Flachgutes. Weiterhin wird beschrieben, dass die Anlagen mit Hilfe von mehrwindigen Spulen flexibler an die jeweiligen Anforderungen angepasst werden können, indem die Geometrie der Spulenköpfe durch eine gespreizte Verteilung der Einzelleiter variiert wird.

Zur flexiblen Einstellung der Temperaturverteilung im Flachgut ist in der japanischen Patent JP 63195397 eine Induktorschleife bestehend aus zwei Induktorspulen quer zum Flachgut und zwei Induktorspulen längs zum Flachgut beschrieben. Die beiden sich in Längsrichtung des Flachgutes erstreckenden Spulen können in Querrichtung des Flachgutes verschoben werden, so dass die Temperaturverteilung an den Seitenkanten des Flachgutes einstellbar ist.

Aus der DE-OS 39 28 629 A1 ist ferner die Verwendung einer Induktorspule für Induktionsöfen bekannt, die Nuten eines aus Transformatorblechen gebildeten Eisenkernes eingelassen sind. Die Eisenkerne sind zickzack- oder wellenförmig ausgebildet und die Stromleiter sind schaltbar, so dass die Anlage flexibel an die jeweilige Breite des Flachgutes eingestellt werden kann.

Weiterhin ist aus der EP-O 667 731 B1 eine Querfluss-Heizbaueinheit mit einstellbarer Breite für die Induktionserwärmung bekannt, bei der zwei Hälften einer Induktorspule parallel zueinander verschoben werden können, so dass der Abstand der Spulenköpfe voneinander veränderbar ist. Auf diese Weise kann die Induktoreinrichtung flexibel an die jeweilige Breite des Flachgutes angepasst werden.

Weiterhin ist in der DE 42 34 406 A 1 eine Querfeld-Banderwärmungsanlage beschrieben, bei dem die Induktorspulen in Vorschubrichtung des Flachgutes so angeordnet sind, dass jede Kante des Flachgutes von den Spulenköpfen lediglich einer Induktionsschleife überragt wird. Die Spulenköpfe enden somit abwechselnd im Bereich der rechten und linken Seitenkante des Flachgutes und überragen die Seitenkante nicht.

Das Problem der herkömmlichen Querfeld-Erwärmungsanlagen ist, dass diese nur sehr aufwendig an die jeweilige Betriebssituation, insbesondere die Bandbreite, angepasst werden können. Zudem kann der für die Temperaturverteilung wichtige Spulenkopf an den Kanten des Bandes in herkömmlichen Querfeld-Erwärmungsanlagen nicht variiert werden.

Durch optimale Gestaltung des Spulenkopfes kann nämlich, wie beispielsweise in der DE 100 13 061 A1 beschrieben ist, die Temperaturverteilung insbesondere an den Bandkanten erheblich vergleichmäßigt werden.

Diese vorgenannten Probleme werden mit der gattungsgemäßen Querfeld-Erwärmungsanlage erfindungsgemäß dadurch gelöst, dass
- die Induktoreinrichtung mindestens zwei parallel zur Ebene des Flachgutes übereinander angeordnete Induktorlagen hat, die unabhängig voneinander quer zur Vorschubrichtung verschiebbar sind,
- die Induktorlagen jeweils zwei Induktorabschnitte mit je zwei parallel voneinander beabstandeten und sich quer zur Vorschubrichtung erstreckenden Basisschenkein und einem sich quer zu den Basisschenkeln erstreckenden und zwei Enden der Basisschenkel verbindenden Seitenschenkel haben, wobei eine Induktorlage einen Seitenschenkel pro Bandkante des Flachgutes hat,
- die Induktorabschnitte einer Induktorlage quer zur Vorschubrichtung unabhängig voneinander verschiebbar sind.

Durch den mehrlagigen Aufbau der Induktoreinrichtung wird erreicht, dass die Seitenschenkel der Induktorlagen pro Bandkante quer zur Vorschubrichtung gegeneinander verschoben werden können, so dass die effektive Breite des Spulenkopfes damit einstellbar ist. Durch den zweiteiligen Aufbau jeder Induktorlage wird erreicht, dass die effektive Breite der Induktoreinrichtung einstellbar ist. Damit ist sowohl eine stufenlose Einstellung der Induktoreinrichtung auf die jeweilige Bandbreite des Flachgutes möglich und gleichzeitig kann die Temperaturverteilung durch Optimierung des Spulenkopfes, d.h. im Bereich der Seitenschenkel und der Bandkanten optimal eingestellt werden.

Vorzugsweise sind unmittelbar nebeneinander parallel angeordnete Basisschenkel unterschiedlicher Indulctorabschnitte einer bezogen auf die Ebene des Flachguts auf der gleichen Ebene liegenden Induktorlage so nah nebeneinander angeordnet, dass in diesem Bereich das elektromagnetische Feld kompensiert wird. Hierbei ist die Stromrichtung dieser unmittelbar nebeneinander liegenden Basisschenkel gegenläufig. Diese Kompensation erfolgt an der Bandkante, in deren Bereich sich die Basisschenkel beider Induktorabschnitte einer Induktorlage befinden, so dass insbesondere dort vergleichbar mit der anderen Bandkante ein gleichartiges elektromagnetisches Feld und damit eine gleichartige Temperaturverteilung gewährleistet ist. Dabei müssen die Ströme, die durch die einzelnen Induktorabschnitte fließen, gleich sein, um die Kompensation zu gewährleisten. In den unterschiedlichen Lagen können allerdings unterschiedliche Ströme fließen.

Die Polbreiten der Induktorabschnitte als Abstand der parallelen Basisschenkel jeweils eines Induktorabschnittes können für unterschiedliche Induktorlagen gleich oder aber auch voneinander verschieden sein.

In einer vorteilhaften Ausführungsform hat der Induktor feldführende Blechpakete, die beispielsweise als Ferrite ausgeführt sind, um die Wärmequellen- und Temperaturverteilung im Flachgut anzupassen. Damit werden auch Streufelder im Außenbereich reduziert und der Wirkungsgrad verbessert. Vorteilhaft ist auch eine elektromagnetische Schirmung beispielsweise als Kupferplatten.

Die Spulenköpfe der Induktorabschnitte, die durch die Seitenschenkel und die daran angeschlossenen Endabschnitte der Basisschenkel definiert sind, können einen eckigen, abgerundeten oder an eine jeweilige Betriebssituation angepassten Verlauf haben.

Die Erfindung wird nachfolgend anhand der beigefügten Zeichnungen näher erläutert. Es zeigen:

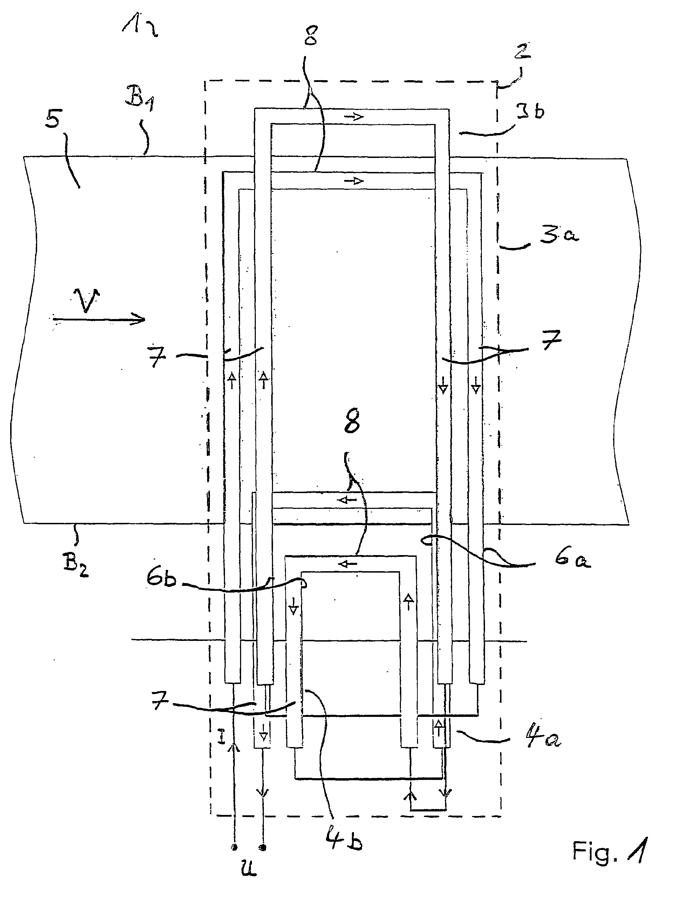

- Figur 1 -: schematische Darstellung einer erfindungsgemäßen Induktoreinrichtung.

Die Figur 1 lässt die erfindungsgemäße Querfeld-Erwärmungsanlage 1 schematisch erkennen. Die Querfeld-Erwärmungsanlage 1 hat eine Induktoreinrichtung 2 mit vier Induktorabschnitten 3a, 3b, 4a, 4b, die auf zwei Ebenen übereinander parallel zur Oberfläche des Flachgutes 5 angeordnet sind. Dabei bilden die Induktorabschnitte 3a, 4a eine erste Induktorlage 6a in einer ersten Ebene über dem Flachgut 5. Die Induktorabschnitte 3b, 4b bilden eine zweite Induktorlage 6b auf einer darüberliegenden Ebene. Es können auch mehrere Induktoreinrichtungen 2 beispielsweise nebeneinander und/oder oberhalb und unterhalb des Flachgutes 5 in einer Querfeld-Erwärmungsanlage 1 vorgesehen sein.

Die beiden Induktorlagen 6a, 6b sind quer zur Vorschubrichtung V parallel zueinander in Erstreckungsrichtung verschiebbar. Damit ist die effektive Breite der Induktoreinrichtung 2 einstellbar.

Die Induktorlagen 6a, 6b haben wie dargestellt jeweils zwei Induktorabschnitte 3a, 4a und 3b, 4b. Jeder Induktorabschnitt 3, 4 hat jeweils zwei parallel voneinander beabstandete und sich quer zur Vorschubrichtung V erstreckende längere Basisschenkel 7 sowie jeweils einen kürzeren Seitenschenkel 8, der die nicht für den Stromanschluss vorgesehenen Enden der Basisschenkel 7 miteinander verbindet und sich in Vorschubrichtung V erstreckt. Die Seitenschenkel 8 sind im Bereich der rechten und linken Bandkante B₁, B₂ angeordnet, wobei jede Induktorlage 6a, 6b jeweils einen Seitenschenkel 8 im Bereich der rechten und linken Bandkante B₁ und B₂ hat.

Die Basisschenkel 7 der in Vorschubrichtung V gesehen rechts angeordneten Induktorabschnitte 4a, 4b erstrecken sich von den Seitenschenkeln 8 und dem Flachgut 5 weg nach außen, so dass diese zur Erwärmung des Flachgutes 5 kaum wirksam sind.

Die Induktorabschnitte 3a und 4a sowie 3b und 4b einer jeden Induktorlage 6a, 6b sind ebenfalls quer zur Vorschubrichtung V relativ zueinander verschiebbar. Damit ist nicht nur die effektiv wirksame Breite der Induktoreinrichtung 2, sondern auch die Breite des durch die Seitenschenkel 8 und der in diesem Bereich liegenden Abschnitte der Basisschenkel 7 gebildeten Spulenkopfes einstellbar. Durch Verschiebung der Induktorlagen 6a, 6b relativ zueinander sowie der Induktorabschnitte 3a, 4a und 3b, 4b jeweils einer Induktorlage 6a, 6b relativ zueinander können nämlich die Abstände der Seitenschenkel 8 pro Bandkante B₁ und B₂ variiert werden. Dieser Abstand bestimmt im wesentlichen die Geometrie des Spulenkopfes.

Die Induktorabschnitte 3, 4 werden vorzugsweise mit dem gleichen Strom I beaufschlagt und sind wie dargestellt zusammengeschaltet und an eine Spannungsquelle U geklemmt. Dadurch, dass die jeweils unmittelbar nebeneinander liegenden parallelen Basisschenkel 7 unterschiedlicher Induktorabschnitte 3a, 4a und 3b, 4b einer Induktorlage 6a und 6b mit sehr geringem Abstand zueinander angeordnet sind, wird in diesem Bereich das elektrische Feld jeweils kompensiert, da die Stromrichtungen der jeweils zusammenwirkenden Basisschenkel 7 entgegengesetzt zueinander sind. Der Stromanschluss für die entsprechenden Enden der Basisschenkel 7 kann beispielsweise mit Klemmbacken erfolgen, die auf den Umfang der Basisschenkel z. B. mit Spannschrauben geklemmt werden. Weiterhin ist es vorteilhaft, wenn die Induktorabschnitte 3, 4 aus einem Rohr mit rundem oder eckigem Querschnitt gebildet sind, wobei an den offenen Enden der Induktorabschnitte 3 und 4 jeweils ein Fluidanschluss vorgesehen ist, um die hohlen Induktorabschnitte 3, 4 mit einem Kühlmittel zu durchströmen.

## Patentansprüche

1. Querfeld-Erwärmungsanlage (1) zur induktiven Erwärmung von in eine Vorschubrichtung (V) transportierbarem Flachgut (5) mit mindestens einer sich quer zur Vorschubrichtung (V) über die Breite des Flachgutes (5) erstreckenden Induktoreinrichtung (2), **dadurch gekennzeichnet, dass**
- die Induktoreinrichtung (2) mindestens zwei parallel zur Ebene des Flachgutes (5) übereinander angeordnete Induktorlagen (6a, 6b) hat, die unabhängig voneinander quer zur Vorschubrichtung (V) verschiebbar sind,
- die Induktorlagen (6a, 6b) jeweils zwei Induktorabschnitte (3, 4) mit zwei parallelen voneinander beabstandeten und sich quer zur Vorschubrichtung (V) erstreckenden Basisschenkeln (7) und einem sich quer zu dem Basisschenkeln (7) erstreckenden und zwei Enden der Basisschenkel (7) verbindenden Seitenschenkel (8) haben, wobei eine Induktorlage (6a, 6b) jeweils einen Seitenschenkel (8) pro Bandkante (B₁, B₂) des Flachgutes (5) hat, und
- die Induktorabschnitte (3, 4) einer Induktorlage (6a, 6b) quer zur Vorschubrichtung (V) unabhängig voneinander verschiebbar sind.

2. Querfeld-Erwärmungsanlage (1) nach Anspruch 1, **dadurch gekennzeichnet, dass** sich die Basisschenkel (7) eines Induktorabschnittes (3, 4) einer Induktorlage (6a, 6b) ausgehend von dem zugeordneten Seitenschenkel (8) von dem Flachgut (5) weg erstrecken.

3. Querfeld-Erwärmungsanlage (1) nach einem der Ansprüche 1 oder 2, **dadurch gekennzeichnet, dass** die Abstände der parallelen Basisschenkel (7) der Indulctorabschnitte (3, 4) angrenzender Induktorlagen (6a, 6b) unterschiedlich sind.

4. Querfeld-Erwärmungsanlage (1) nach einem der vorhergehenden Ansprüche, **dadurch gekennzeichnet, dass** der Abstand der parallelen Basisschenkel (7) angrenzender Induktorabschnitte (3a, 4a und 3b, 4b) einer Induktorlage (6a, 6b) die jeweils mit gegenläufigen Stromrichtungen beaufschlagbar sind, so gering gewählt ist, dass das elektromagnetische Feld kompensiert wird.

5. Querfeld-Erwärmungsanlage (1) nach einem der vorhergehenden Ansprüche, **dadurch gekennzeichnet, dass** die Induktorlagen (6a, 6b) feldführende Blechpakete und/oder eine elektromagnetische Schirmung haben.

6. Querfeld-Erwärmungsanlage (1) nach einem der vorhergehenden Ansprüche, **dadurch gekennzeichnet, dass** die Spulenköpfe der Induktorabschnitte (3, 4), die durch die Seitenschenkel (8) und die daran angeschlossenen Endabschnitte der Basisschenkel (7) definiert sind, einen eckigen oder abgerundeten Verlauf haben.

7. Querfeld-Erwärmungsanlage (1) nach einem der vorhergehenden Ansprüche, **dadurch gekennzeichnet, dass** Indulctoreinrichtungen (2) oberhalb und unterhalb des Flachgutes (5) vorgesehen sind und die Induktorabschnitte (3, 4) der oberen und unteren Induktoreinrichtungen (2) spiegelbildlich oder spiegelverkehrt zueinander ausgerichtet sind.

## Claims

1. A transversal field heating installation (1) for inductively heating flat objects (5) that can be transported in an advancing direction (V), with at least one inductor unit (2) extending transversely in relation to the advancing direction (V) over the width of the flat object (5), **characterized in that**
- the inductor unit (2) has at least two inductor layers (6a, 6b) arranged one on top of the other parallel to the plane of the flat object (5), which layers can be displaced independently of each other transversely in relation to the advancing direction (V),
- the inductor layers (6a, 6b) in each case have two inductor portions (3, 4), with two base limbs (7) extending transversely in relation to the advancing direction (V) and a lateral limb (8) extending transversely in relation to the base limbs (7) and connecting two ends of the base limbs (7), an inductor layer (6a, 6b) respectively having one lateral limb (8) for each strip edge (B₁, B₂) of the flat object (5), and
- the inductor portions (3, 4) of an inductor layer (6a, 6b) being displaceable independently of each other transversely in relation to the advancing direction (V).

2. The transversal field heating installation (1) as claimed in claim 1, **characterized in that** the base limbs (7) of an inductor portion (3, 4) of an inductor layer (6a, 6b) extend away from the flat object (5), starting from the assigned lateral limb (8).

3. The transversal field heating installation (1) as claimed in either of claims 1 and 2, **characterized in that** the distances between the parallel base limbs (7) of the inductor portions (3, 4) of adjacent inductor layers (6a, 6b) differ.

4. The transversal field heating installation (1) as claimed in one of the preceding claims, **characterized in that** the distance between the parallel base limbs (7) of adjacent inductor portions (3a, 4a and 3b, 4b) of an inductor layer (6a, 6b), which can in each case be subjected to current running in different directions, is chosen to be so small that the electromagnetic field is compensated.

5. The transversal field heating installation (1) as claimed in one of the preceding claims, **characterized in that** the inductor layers (6a, 6) have field-guiding laminated cores and/or an electromagnetic shielding.

6. The transversal field heating installation (1) as claimed in one of the preceding claims, **characterized in that** the end windings of the inductor portions (3, 4), which are defined by the lateral limbs (8) and the end portions of the base limbs (7) connected to them, have a profile which is angular or rounded off.

7. The transversal field heating installation (1) as claimed in one of the preceding claims, **characterized in that** inductor units (2) are provided above and below the flat object (5), and the inductor portions (3, 4) of the upper and lower inductor units (2) are aligned in mirror image or inverted mirror image in relation to one another.

## Revendications

1. Installation de chauffage à champs transversaux (1) servant au chauffage par induction d'objets plats (5) transportable dans une direction d'avancement (V) comprenant au moins un dispositif d'induction (2) s'étendant transversalement à la direction d'avancement (V) suivant la largeur des objets plats (5), **caractérisée en ce que**,
- le dispositif d'induction (2) comporte au moins deux couches d'induction (6a, 6b) disposées l'une au dessus de l'autre parallèlement au plan des objets plats (5) qui peuvent coulisser indépendamment l'une par rapport à l'autre transversalement à la direction d'avancement (V),
- les couches d'induction (6a, 6b) ont chacune deux sections d'induction (3, 4) ayant deux branches de base (7) parallèles l'une à l'autre, espacées et s'étendant transversalement à la direction d'avancement (V) et une branche latérale (8) s'étendant transversalement aux branches de base (7) et reliant les deux extrémités de la branche de base (7), l'une des couches d'induction (6a, 6b) ayant chacune une branche latérale (8) par bord de bande (B1, B2) des objets plats (5) et
- les sections d'induction (3, 4) d'une couche d'induction (6a, 6b) peuvent coulisser indépendamment l'une de l'autre transversalement à la direction d'avancement (V).

2. Installation de chauffage à champs transversaux (1) selon la revendication 1, **caractérisée en ce que** les branches de base (7) d'une section d'induction (3, 4) d'une couche d'induction (6a, 6b) s'étendent en s'éloignant des objets plats (5) à partir de la branche latérale (8) correspondante.

3. Installation de chauffage à champs transversaux (1) selon l'une des revendications 1 ou 2, **caractérisée en ce que** les espacements des branches de base (7) parallèles des sections d'induction (3, 4) sont différents entre les couches d'induction (6a, 6b) adjacentes.

4. Installation de chauffage à champs transversaux (1) selon l'une des revendications précédentes, **caractérisée en ce que** l'espacement des branches de base (7) parallèles des sections d'induction adjacentes (3a, 4a et 3b, 4b) d'une couche d'induction (6a, 6b) qui peuvent chacune être percutée par des directions de courant opposées, est choisi pour être suffisamment faible afin que le champ électromagnétique soit compensé.

5. Installation de chauffage à champs transversaux (1) selon l'une des revendications précédentes, **caractérisée en ce que** les couches d'induction (6a, 6b) ont des paquets de tôle guidant le champ et/ou un blindage électromagnétique.

6. Installation de chauffage à champs transversaux (1) selon l'une des revendications précédentes, **caractérisée en ce que** les têtes des spires des sections d'induction (3, 4) qui sont définies par les branches latérales (8) et les parties terminales des branches de base (7) qui sont raccordées à celles-ci, présentent un profil en coin ou arrondi.

7. Installation de chauffage à champs transversaux (1) selon l'une des revendications précédentes, **caractérisée en ce que** des dispositifs d'induction (2) sont prévus au dessus et en dessous des objets plats (2) et les sections d'induction (3, 4) des dispositifs d'induction supérieurs et inférieurs sont agencés les uns par rapport aux autres de façon symétrique ou de façon inversement symétrique.
